# EUROPÄISCHE PATENTSCHRIFT

(11) **EP 1 286 921 B1**
(45) Veröffentlichungstag und Bekanntmachung des Hinweises auf die Patenterteilung: **27.12.2017**
(21) Anmeldenummer: 01949335.2
(22) Anmeldetag: 11.05.2001
(51) Int. Cl.: C02F 3/12

(54) **VERFAHREN ZUR AEROBEN BIOLOGISCHEN ABWASSERREINIGUNG**
METHOD FOR THE AEROBIC, BIOLOGICAL PURIFICATION OF WASTE WATER
PROCEDE POUR L'EPURATION BIOLOGIQUE AEROBIE D'EAUX USEES

(30) Priorität: 13.05.2000 DE 10023652
(43) Veröffentlichungstag der Anmeldung: 05.03.2003
(73) Patentinhaber: Air Liquide Deutschland GmbH, 40235 Düsseldorf (DE); Messer Group GmbH, 65812 Bad Soden (DE)
(72) Erfinder: HERTRAMPF, Joachim, 49497 Mettingen (DE); HASSELBUSCH, Holger, 47506 Neukirchen-Vluyn (DE)
(74) Vertreter: Kahlhöfer, Hermann
(86) Internationale Anmeldenummer: PCT/EP2001/005373
(87) Internationale Veröffentlichungsnummer: WO 2001/087781

(56) Entgegenhaltungen:
- EP-A- 0 070 960
- WO-A-97/00832
- DE-A- 2 125 983
- US-A- 4 206 047

## Beschreibung

Die Erfindung betrifft ein Verfahren zur aeroben biologischen Abwasserreinigung, nach dem Oberbegriff von Anspruch 1.
Bei der bisherigen, eine mechanische und/oder biologische Vorreinigung, eine biologische Reinigungsstufe (Belebung) und eine mechanische und/oder biologische Nachreinigung aufweisenden aeroben biologischen Abwasserreinigung wird durch die im Abwasser der Belebung vorhandene aerobe Biomasse (Mikroben) die in dem Abwasser in Form von Kohlenstoff-, Stickstoff- und Phosphorverbindungen enthaltene organische Schmutzfracht zum größten Teil bzw. vollständig eliminiert.
Der für die Versorgung der das Abwasser von der Schmutzfracht reinigenden aeroben Bakterien in der Belebung benötigte Sauerstoff wird in das Abwasser der Belebung als sauerstoffhaltiges Gas über in unterschiedlichen Abwasserbereichen angeordnete Belüftungssysteme eingetragen (vergleiche beispielsweise DE 21 25 983 A und EP 0 070 960 A).
Durch den bei dieser bekannten aeroben biologischen einstufigen Abwasserreinigung im gesamten Beckenbereich der Belebung erfolgenden gleichmäßigen Sauerstoffeintrag ist speziell eine unterschiedliche Sauerstoffgehalte in der Belebung erfordernde Stickstoffelimination nur mit einer erhöhten Sauerstoffzufuhr möglich.
Aus der US 4,206,047 ist eine Verfahrensführung zur mehrstufigen Abwasserreinigung bekannt, bei der in den ersten Stufen Luft zugeführt wird, während in der letzten Stufe zusätzlich reiner Sauerstoff zugegeben wird.
Der Erfindung liegt die Aufgabe zugrunde, ein Verfahren zur aeroben biologischen Abwasserreinigung mit einem optimierten Sauerstoffeintrag zu schaffen.

Die Aufgabe wird durch ein Verfahren mit den Merkmalen von Anspruch 1 gelöst.
Vorteilhafte Weiterbildungen der Erfindung sind in den Unteransprüchen angegeben.
Durch die erfindungsgemäße Segmentierung und Kaskadierung der Belüftung in Verbindung mit einem in den einzelnen Kaskaden geregelten, optimalen

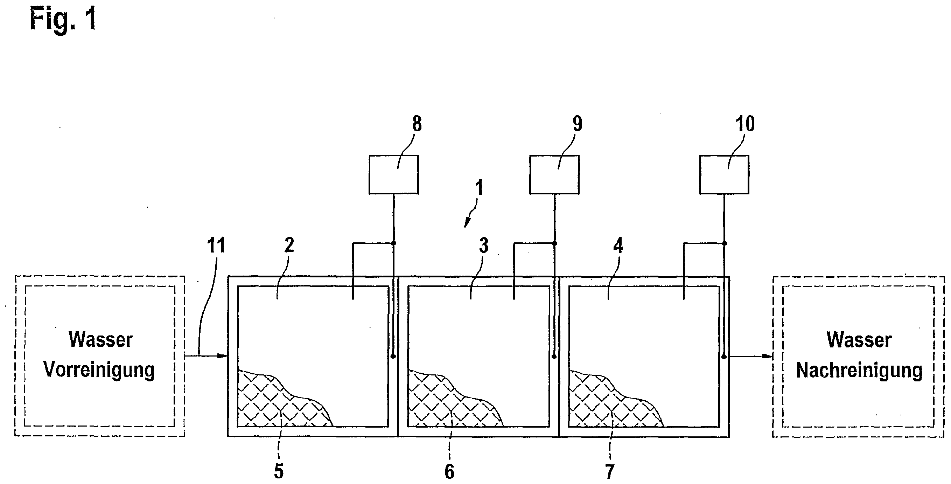

Sauerstoffeintrag kann die Stickstoffeliminierung optimiert, der Sauerstoffeintrag in der Belebung um etwa 7 bis 12% verringert und somit eine effektive und kostengünstige aerobe biologische Abwasserreinigung gewährleistet werden.
Erfindungsgemäß wird die Belebung in der Zulaufkaskade (Zulaufbecken) bei niedrigstem Alpha-Wert (Sauerstoffeintrag unter Betriebsbedingungen/ Sauerstoffeintrag in Reinwasser) mit einem Sauerstoffsollwert von 0,5 bis 1,0 mg/l angefahren und in der Ablaufkaskade (Ablaufbecken) bei höchstem Alpha-Wert mit einem Sauerstoffsollwert von bis zu 2 mg/l beendet.
Der dem Sauerstoffeintrag zugrundliegende und auf bekannte Weise ermittelte Sauerstoff-Gradient wird in Abhängigkeit von den jeweiligen spezifischen Reinheitsforderungen an das gereinigte Abwasser (zulässiger Restgehalt an organischer Schmutzfracht im Ablauf-Abwasser) eingestellt und die in jeder Belebungsstufe benötigte Sauerstoffmenge über ein im Abwasserbereich angeordnetes, elektronisch geregeltes Belüftungsgitter und am Beckenboden angeordnete, elektronisch geregelte Platten-, Folien-, Schlauch- oder Keramik-Belüftern eingetragen.
Die Zeichnung veranschaulicht in schematischer Form ein Ausführungsbeispiel der Erfindung.
Die in der Figur dargestellte aerobe biologische Abwasserreinigung umfasst eine mit einer Vor- und Nachreinigung verbundene und mit aerober Biomasse in Form von aeroben Mikroben versetzte Belebung 1. Die Belebung 1 besteht aus in Abwasser-Strömungsrichtung angeordneten, miteinander verbundenen Kaskaden 2, 3, 4. Jede Kaskade 2, 3, 4 ist mit mindestens ein zur Zuführung von gasförmigem Sauerstoff in Form von Teller-, Platten-, Folien-, Schlauch- oder Keramik-Belüftern am jeweiligen Beckenboden auf nicht dargestellte Weise angeordnetes Belüftungssystem sowie mit mindestens ein, im Abwasserbereich jeder Kaskade 2, 3, 4 zur Zuführung von gasförmiger Luft als Lüftungsgitter 5, 6, 7 ausgebildetes Belüftungssystem ausgerüstet. Zur geregelten Sauerstoff-Zufuhr in das Abwasser jeder Kaskade 2, 3, 4 sind deren Belüftungssysteme mit jeweils einer Meß- und Regeleinheit (8, 9, 10) verbunden.

In das mechanisch und/oder biologisch auf übliche Weise vorgereinigte und über Leitung 11 in die Kaskade 2 der Belebung 1 zugeführte und mit aeroben Mikroben versetzte Abwasser wird mittels der Meß- und Regeleinheit 8 der spezifische Sauerstoffgehalt des Abwassers gemessen und der zur optimalen Reinigung des Abwassers von seiner Schmutzfracht ermittelte Sauerstoffbedarf über das in vorbeschriebener Weise ausgebildete, am Beckenboden der Kaskade 2 angeordnete Belüftungssystem in Form von gasförmigem Sauerstoff und über das im Abwasserbereich der Kaskade 2 angeordnete Belüftungsgitter 5 in Form von gasförmiger Luft in das Abwasser eingetragen. Die nunmehr mit einem Sauerstoffeintrag von 0,5 bis 0,8 mg/l in der Kaskade 2 durch die im Abwasser vorhandenen aeroben Mikroben erfolgende biologische Reinigung des Abwassers von seiner organischen Schmutzfracht wird unter ständiger und/oder teilweiser mechanischer Umwälzung des Abwassers bei Temperaturen von 4 bis 35° C bis zu einem Abwasser-Restgehalt an organischer Schmutzfracht von etwa 35% durchgeführt.

Das auf die vorbeschriebene Weise mittels aeroben Mikroben biologisch vorgereinigte Abwasser wird der Kaskade 3 zugeführt und in dieser mittels im Abwasser vorhandener aerober Mikroben von weiteren Restbestandteilen seiner organischen Schmutzfracht befreit. Dazu wird in dem in der Kaskade 3 eingeströmten Abwasser der Sauerstoffbedarf mittels der Meß- und Regeleinheit 9 ermittelt und über das mit dieser Meß- und Regeleinheit 9 schalttechnisch verbundene, am Beckenboden der Kaskade 3 auf nicht dargestellte Weise angeordnete Belüftungssystem in Form von gasförmigem Sauerstoff sowie über das im Abwasserbereich der Kaskade 3 angeordnete Lüftungsgitter 6 in Form von gasförmiger Luft in das Abwasser eingetragen. Die mit einem Sauerstoffgehalt von 0,8 bis 1,2 mg/l erfolgende aerobe biologische Abwasserreinigung in der Kaskade 3 wird unter ständiger oder teilweiser mechanischer Abwasser-Umwälzung bei Temperaturen von 4 bis 35 °C bis zu einem Abwasser-Restgehalt an organischer Schmutzfracht von etwa 10 % durchgeführt.

Das auf die vorbeschriebene Weise vorgereinigte Abwasser wird der Kaskade 4 zugeführt und in dieser von seiner restlichen organischen Schmutzfracht befreit. Dazu wird der Sauerstoffbedarf mittels der Meß- und Regeleinheit 10 ermittelt und über das mit der Meß- und Regeleinheit 10 schalttechnisch verbundene, am Beckenboden der Kaskade 4 auf nicht dargestellte Weise angeordnete Belüftungssystem in Form von gasförmigem Sauerstoff und über das im Abwasserbereich der Kaskade 4 angeordnete Lüftungsgitter 7 in Form von gasförmiger Luft in das Abwasser eingetragen. Die abschließende aerobe biologische Abwasserreinigung in der Kaskade 4 erfolgt unter ständiger oder teilweiser mechanischer Abwasserumwälzung bei Temperaturen von 4 bis 35 °C bis zu einem Restgehalt an Schmutzfracht von etwa 5 % bei einem Sauerstoffgehalt von 1,5 bis 2,0 mg/l.
Das nunmehr auf die vorbeschriebene Weise aerob biologisch gereinigte Abwasser wird anschließend entweder mechanisch und/oder biologisch nachgereinigt.

### Bezugszeichen-Aufstellung

- 1: Belebung
- 2: Kaskade
- 3: Kaskade
- 4: Kaskade
- 5: Lüftungsgitter
- 6: Lüftungsgitter
- 7: Lüftungsgitter
- 8: Meß- und Regeleinheit
- 9: Meß- und Regeleinheit
- 10: Meß- und Regeleinheit
- 11: Leitung

## Patentansprüche

1. Verfahren zur aeroben biologischen Abwasserreinigung, bei welchem das vorgereinigte Abwasser in einer Belebung mittels sauerstoffhaltigem Gas unterhaltener aerober Biomasse biologisch gereinigt wird, **dadurch gekennzeichnet, dass** diese in einer drei Kaskaden (2, 3, 4) umfassenden Kaskaden-Belebung (1) mit unterschiedlichen Sauerstoffeinträgen erfolgt, dass der Sauerstoffeintrag in der ersten Kaskade (2) 0,5 bis 0,8 mg/l, in der zweiten Kaskade (3) 0,8 bis 1,2 mg/l und in der dritten Kaskade (4) 1,5 bis 2,0 mg/l ist, dass in jeder Kaskade (2, 3, 4) eine Zuführung von gasförmigem Sauerstoff durch mindestens einen Teller-, Platten-, Folien-, Schlauch- oder Keramik-Belüfter am Beckenboden und eine Zuführung von gasförmiger Luft durch mindestens ein im Abwasserbereich angeordnetes als Lüftungsgitter (5, 6, 7) ausgebildetes Belüftungssystem erfolgt.

2. Verfahren nach Anspruch 1,
**dadurch gekennzeichnet, dass**
der Sauerstoffeintrag in das Abwasser jeder Kaskade (2, 3, 4) in Abhängigkeit von dem im Abwasser ermittelten Sauerstoffbedarf erfolgt.

3. Verfahren nach Anspruch 1 oder 2,
**dadurch gekennzeichnet, dass**
der Sauerstoffeintrag in das Abwasser jeder Kaskade (2, 3, 4) elektronisch geregelt erfolgt.

## Claims

1. A method for the aerobic, biological purification of waste water, in which the pre-cleaned waste water is biologically purified in an aeration by means of an aerobic biomass maintained by an oxygenated gas, **characterized in that** this takes place using a cascade bio-aeration (1) with varying oxygen supplies, which cascade is comprised of three cascades (2, 3, 4); that the oxygen supply is 0.5 to 0.8 mg/l in the first cascade (2), 0.8 to 1.2 mg/l in the second cascade (3) and 1.5 to 2.0 mg/l in the third cascade (4); that in each cascade (2, 3, 4) gaseous oxygen is supplied by at least one disk diffuser, plate diffuser, film diffuser, tube diffuser or ceramic diffuser at the bottom of the tank, and gaseous air is supplied by at least one aeration system arranged, in the waste water area, as a ventilation grille (5, 6, 7).

2. The method according to claim 1,
**characterized in that,**
oxygen is supplied to the waste water of each cascade (2, 3, 4) depending on the oxygen requirement ascertained in the waste water.

3. The method according to claim 1 or 2,
**characterized in that,**
the oxygen supply to the waste water of each cascade (2, 3, 4) is electronically controlled.

## Revendications

1. Procédé d'épuration biologique aérobie d'eaux usées, dans lequel les eaux usées pré-épurées sont épurées biologiquement dans une biomasse aérobie soumise à une activation au moyen d'un gaz contenant de l'oxygène, **caractérisé en ce que** celui-ci se fait dans une activation en cascade (1) comprenant trois cascades (2, 3, 4) avec différents apports d'oxygène, l'apport d'oxygène dans la première cascade (2) est de 0,5 à 0,8 mg/l, dans la deuxième cascade (3) de 0,8 à 1,2 mg/l et dans la troisième cascade (4) de 1,5 à 2,0 mg/l, dans chaque cascade (2, 3, 4) un acheminement d'oxygène gazeux se fait par au moins un ventilateur à disque, à plaque, à film, à tube ou à céramique sur le fond du bassin et un acheminement d'air gazeux par au moins un système de ventilation agencé dans les zone des eaux usées sous la forme de grilles d'aération (5, 6, 7).

2. Procédé selon la revendication 1,
**caractérisé en ce que**
l'apport d'oxygène dans les eaux usées de chaque cascade (2, 3, 4) se fait en fonction du besoin en oxygène déterminé dans les eaux usées.

3. Procédé selon la revendication 1 ou 2,
**caractérisé en ce que**
l'apport d'oxygène dans les eaux usées de chaque cascade (2, 3, 4) se fait par réglage électronique.
